# EUROPÄISCHE PATENTSCHRIFT

(11) **EP 2 258 034 B1**
(45) Veröffentlichungstag und Bekanntmachung des Hinweises auf die Patenterteilung: **17.05.2017**
(21) Anmeldenummer: 09718052.5
(22) Anmeldetag: 27.02.2009
(51) Int. Cl.: H02J 13/00

(54) **RUNDSTEUERSYSTEM FÜR EIN VERSORGUNGSGEBIET**
RIPPLE CONTROL SYSTEM FOR A SUPPLY AREA
SYSTÈME DE TÉLÉCOMMANDE CENTRALISÉE POUR UNE ZONE DE COUVERTURE

(30) Priorität: 05.03.2008 EP 08102303
(43) Veröffentlichungstag der Anmeldung: 08.12.2010
(73) Patentinhaber: Landis+Gyr AG, 6301 Zug (CH)
(72) Erfinder: SCHEIDEGGER, Jürg, CH-8047 Zürich (CH); NELLEN, Silvan, CH-8617 Mönchaltdorf (CH); SCHEIDEGGER, Stefan, CH-8047 Zürich (CH)
(74) Vertreter: CMSRK Rentsch Kaelin AG
(86) Internationale Anmeldenummer: PCT/EP2009/001423
(87) Internationale Veröffentlichungsnummer: WO 2009/109339

(56) Entgegenhaltungen:
- CH-A5- 670 923
- DE-A1- 1 913 956
- US-A1- 2003 205 938

## Beschreibung

Die vorliegende Erfindung betrifft ein Rundsteuersystem für ein Versorgungsgebiet nach dem Oberbegriff des Patentanspruchs 1 sowie ein Verfahren zur Überwachung des korrekten Empfangs von in einem Versorgungsgebiet (NS) von einem Rundsteuersystem ausgesandten Telegrammen nach dem Oberbegriff des Patentanspruches 4.

Rundsteuerungsnetze und deren Komponenten wie insbesondere zentral angeordnete Rundsteuersender sind beispielsweise bekannt aus den Schriften EP 0 729 213 B1 [1] und EP 0 738 033 B1 [2]. In dieser Schrift wird auf die Nomenklatur gemäss Rundsteuertechnik [3] verwendet, um allfälligen Klarheitsproblemen zum vorneherein aus dem Weg zu schaffen.

Die heutzutage eingesetzten Rundsteuersysteme haben nur eine unidirektionale Wirkung, zentral werden von einem Rundsteuersender tonfrequente Signale (=Telegramme) ausgesendet, die von peripheren Rundsteuerempfängern empfangen werden zur Steuerung des Energieverbrauchs, zur Zu- oder Abschaltung eines Verbrauches wie z.B. Boiler oder Strassenlampen. In einer Kommandozentrale wird von einem Rundsteuerkommandogerät keine Rückmeldung empfangen, ob gesendete Telegramme im Netz bei den Empfängern (=Endverbraucher) korrekt angekommen sind. Daher wurden Störungen erst durch die Kunden («Endverbraucher») der Elektrizitätswerke erkannt und telefonisch gemeldet. Service-Techniker müssen den meldenden Kunden besuchen, vor Ort ein Messgerät platzieren und nach einer Zeitspanne von mehreren Tagen wieder abholen, um die Daten auszuwerten.

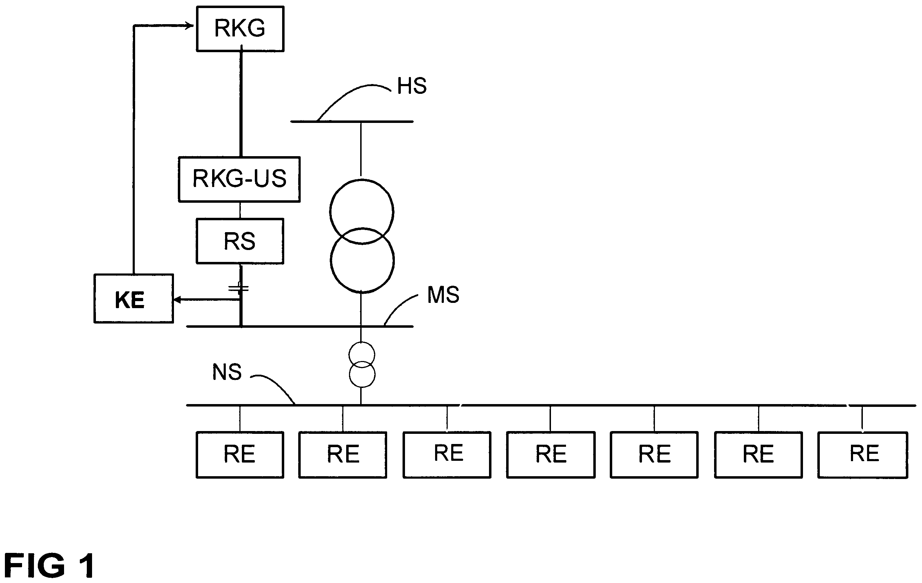

Bisher erfolgte eine Rückmeldung gemäss dem in Figur 1 angegeben Verfahren mit sogenannten Kontrollempfängern nur auf der Mittelspannungsebene MS. Die vom Rundsteuersender RS ausgesandten Telegramme werden von einem Kontrollempfänger KE empfangen und deren Inhalt an ein Rundsteuerkommandogerät RKG übermittelt. Diese Rückmeldung erfolgt in Echtzeit. Diese Lösung ist auch in [3] auf Seite 83 im einzelnen beschrieben.

Diese Rückmeldung auf der Mittelspannungsebene MS berücksichtigt die Einflüsse auf der Niederspannungsebene NS nicht. Die Kontrollempfänger KE können nur bedingt auf der Niederspannungsebene NS angeschaltet werden, da sie über keine Intelligenz verfügen, sondern lediglich den Empfang eines Telegramms weiterleiten und somit eine permanente Verbindung zu einer Überwachungszentrale erfordern.

Der vorliegenden Erfindung liegt daher die Aufgabe zugrunde, ein Rundsteuerungssystem für ein Versorgungsgebiet - auch Niederspannungsebene NS genannt -anzugeben, das eine Überwachung von empfangenen Telegrammen bei peripheren Empfängern erlaubt, ohne dass grosse Eingriffe in die bestehende Infrastruktur erforderlich sind.

Diese Aufgabe wird durch die im Patentanspruch 1 bzw. 4 angegebenen Merkmale gelöst. Vorteilhafte Ausgestaltungen der Erfindung sind in weiteren Ansprüchen angegeben.

Die Erfindung weist summarisch folgende Hauptpunkte auf: Überwachungsempfänger mit einer Übertragungsschnittstelle werden an ausgewählten Stellen in einem Versorgungsgebiet verteilt angeordnet. Diese Überwachungsempfänger sind verbindbar mit einer Überwachungszentrale und in den Überwachungsempfängern zwischengespeicherte Telegramme können aufgrund verschiedener Ereignis an die Überwachungszentrale übermittelt werden. Durch den Vergleich in der Überwachungszentrale mit den ausgesandten Telegrammen kann eine automatisierte Erkennung von Störungen und eine Ausgabe von Warnungsmeldungen erreicht werden.

Der Vorteil der Erfindung liegt darin, dass von der Überwachungszentrale aus eine Kontrolle über verschiedene Punkte im Versorgungsnetz möglich wird. Die Auswertung der empfangenen Telegramme muss nicht mehr vor Ort geschehen. Ausserdem ist eine automatisiertere Sendewiederholung möglich. Dies erlaubt beispielsweise, dass die Strassenbeleuchtung verspätet bzw. später als vorgesehen doch noch eingeschaltet werden kann. Das Anschalten von Überwachungsempfängern erfordert im Versorgungsgebiet selber keinerlei Anpassungen. Für die Übermittlung der empfangenen Telegramme an die Überwachungszentrale kann auf eine bestehende Infrastruktur zurückgegriffen werden, wie z.B. Telefonnetz PSTN/ISDN oder ein Mobilnetz GSM. Dadurch ist auch eine freie Platzierung der Überwachungsempfänger im Versorgungsgebiet möglich, vorzugsweise an Orten, wo sogenannt kritische Verhältnisse bestehen und Empfangsstörungen der tonfrequenten Telegramme bekannt sind oder erwartet werden müssen.

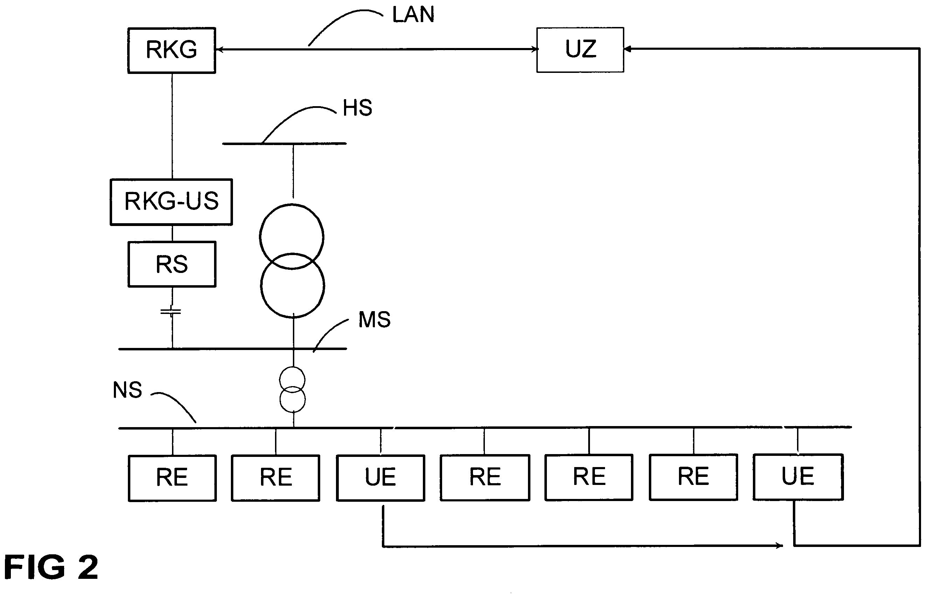

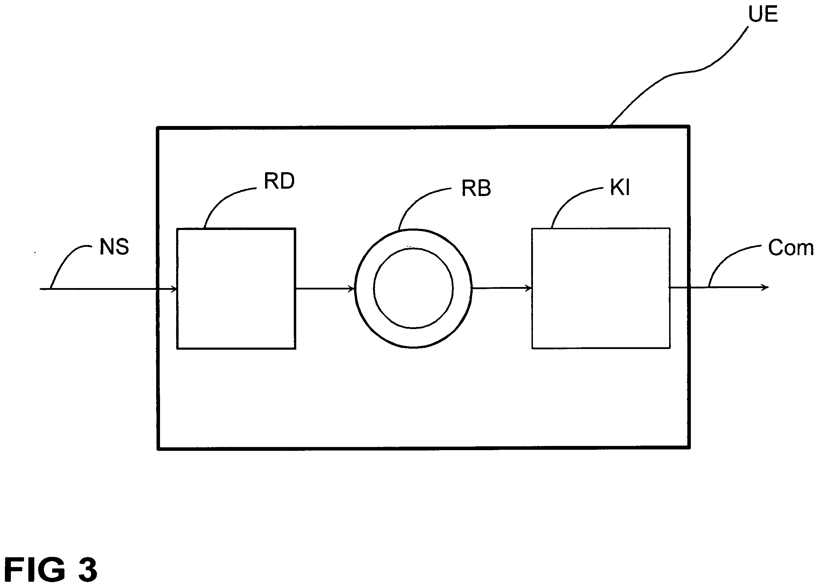

Die Erfindung wird nachfolgend anhand der Zeichnung beispielsweise näher erläutert. Dabei zeigen:
- Figur 1: Anordnung eines Kontrollgerätes für die Rückmeldung von empfangenen Telegrammen ab Mittelsspannungsebene gemäss dem Stand der Technik;
- [0012]: Figur 2
Anordnung von Überwachungsempfängern für die Rückmeldung ab Mittelsspannungsebene
- [0013]: Figur 3
Blockschaltbild eines Überwachungsempfängers.

Figur 2 zeigt die Anordnung von Überwachungsempfängern UE in einem Versorgungsgebiet NS. Gemäss dem Stand der Technik versorgt ein Rundsteuerkommandogerät über ein Unterstellen-Kommandogerät RKG-US eine Rundsteuersender RS mit Befehlen. Der Rundsteuersender speist diese Befehle als tonfrequente Telegramme in ein Mittelspannungsnetz ein. Die Ankopplung des Rundsteuersenders RS an das Mittelspannungsnetz MS erfolgt kapazitiv wie dies symbolisch in Figur 2 gezeigt ist. Das Mittelspannungsnetz MS selbst wird aus einem Hochspannungsnetz HS über Transformatoren mit elektrischer Energie versorgt.

In Figur 2 wird ein Niederspannungsnetz NS - auch Versorgungsgebiet NS genannt - über einen Transformator vom Mittelspannungsnetz MS mit elektrischer Energie versorgt. Am Versorgungsgebiet NS sind Verbraucher angeschlossen (nicht dargestellt in Figur 2), die mit Rundsteuer-Empfängern RE zuoder abgeschaltet werden. Konkrete Ausgestaltungen können der Schrift [3] entnommen werden.

Die Überwachungsempfänger UE werden abhängig von der Topologie des Versorgungsgebietes NS platziert. Dies ergibt sich daraus, dass aufgrund von Dämpfungen im Niederspannungsnetz NS die Rundsteuerpegel der Telegramme sehr verschieden sein können. Diese Art der Platzierung wird auch verteilte Anordnung Überwachungsempfänger UE genannt.

Die prinzipiellen Komponenten eines Überwachungsempfängers UE sind in Figur 3 dargestellt. Diese sind an das Niederspannungsnetz angeschlossen und verfügen dazu über die gleichen Komponenten wie die Rundsteuerempfänger RE, die Verbraucher (nicht dargestellt in den Figuren 1 und 2) abhängig von den empfangenen Telegrammen zu- oder abschalten. So weist ein Überwachungsempfängers UE einen Rundsteuersignaldetektor RD auf, der die empfangenen tonfrequenten Telegramme in ein binäres Format transformiert. Die so transformierten Telegramme werden in einem Pufferspeicher RB gespeichert. Nicht dargestellt in Figur 3 ist ein Prozessorsystem, dass den Pufferspeicher RB administriert und einen Füllstand führt. Im Rundsteuerempfänger RE ist auch eine Uhr vorhanden, so dass die abgespeicherten Telegramme vorzugsweise als Record gemäss Tabelle 1 abgespeichert werden:

**Tabelle 1: Datenrecord des Pufferspeichers RB.**

| |
|---|
| - Telegramm-Inhalt, |
| - Telegramm-Empfangszeit, |
| - Telegramm-Pegel. |

Der Überwachungsempfänger UE enthält weiter ein Kommunikationsinterface mit einem Ausgang Com. Dieser Ausgang Com kann z.B. eine serielle Schnittstelle RS232 sein, an die ein Modem angeschlossen ist, das die Verbindung zur Überwachungszentrale UZ bewerkstelligt. Je nach Ausführungsform ist es möglich, dass die Modemfunktion bereits im Überwachungsempfänger UE integriert ist.

Die Überwachungsempfänger UE haben vorzugsweise folgende Eigenschaften:
- Unterstützung weit verbreiteter Schnittstellen, die einfach über ein Zwischennetzwerk verlängerbar sind; zum Beispiel RS-232;
- für die Schnittstelle müssen möglichst viele Adapter existieren wie Ethernet, Analogmodem, ISDN, GSM/HSCSD;
- alle verwendeten Rundsteuercodes werden unterstützt;
- Zwischenspeicher oder Ringspeicher RB, damit keine permanente Verbindung zur Überwachungszentrale UZ erforderlich ist;
- die interne Uhr muss sekundengenau sein;
- Softwareschnittstelle zum Auslesen des Zwischenspeichers RB und zum Einstellen der internen Uhr des Überwachungsempfängers UE;
- Pegelmessung:
   Pro Telegramm wird zusätzlich zum Bitcode und der Zeit der Pegel des Startimpulses sowie der durchschnittliche Pegel der Address- und Befehlsimpulse, sowie die gemessene Netzspannung abgespeichert;
- Unterstützung für Push-mode:
   der Überwachungsempfänger UE meldet sich selbstständig wenn ein Telegramm eingetroffen ist.

Eine Überwachungszentrale UZ ist mit den Überwachungsempfängern UE verbunden. Als Verbindung kann PSTN/ISDN oder GMS/HSCSD vorgesehen werden. In der Überwachungszentrale UZ kann ein Rechner vorgesehen sein, der folgende Funktionen ausübt:
- Regelmässige Abfrage der Überwachungsempfänger UE und Speicherung der im Pufferspeicher der Überwachungsempfänger UE zwischengespeicherten Telegramme.
- Vergleich der in den Überwachungsempfängern UE empfangenen Telegramme mit den vom Rundsteuerkommandogerät RKG ausgesandten Telegramme (=ein Telegramm kann mehrere Befehle enthalten); dies ist möglich, da die Empfangszeit der Telegramme bekannt ist und die Sendezeit der ausgesandten Telegramme (Befehle) in einer Datenbank der Überwachungszentrale UZ gespeichert ist. Dazu ist die Überwachungszentrale UZ mit dem Rundsteuerkommandogerät RKG verbunden, vorzugsweise über Ethernet/Lan. auch lokales Netz genannt..

Für die Überwachungszentrale sind folgende Betriebsmodi einstellbar:

### Online Modus

Sobald das Rundsteuerkommandogerät RKG ein Telegramm gesendet hat, werden im online Modus die Überwachungsempfänger UE abgefragt und der korrekte Empfang überprüft. Falls das Telegramm nach einer bestimmten Zeit nicht angekommen ist, kann durch die Überwachungszentrale UZ eine Sendewiederholung und/oder eine Alarmmeldung ausgelöst werden. Auf diese Weise hat der Betreiber des Stromnetzes die Kontrolle über den aktuellen Zustand der Aussenstellen und über ausbleibende Telegramme sowie optional eine automatische Sendewiederholung. Der Online-Modus eignet sich bei ständiger Verbindung zu den Überwachungsempfängern UE, die in diesem Fall vorzugsweise über Ethernet angeschlossen sind.

### Abfrage Modus

Im Gegensatz zum online Modus werden die Überwachungsempfänger UE nicht nach jeder Sendung eines Telegramms durch das Rundsteuerkommandogerät RKG abgefragt. Stattdessen werden in einem definierbaren Intervall (z.B. einmal täglich) alle Überwachungsempfänger UE abgefragt und eine Datenbank in der Überwachungszentrale mit den empfangenen Telegrammen und dem Zustand der Aussenstellen nachgeführt. Dies ermöglicht dem Kunden eine Qualitätskontrolle und eine Auswertung der Überwachungs-Daten, ohne in die Regionen wo Störungen auftreten reisen zu müssen. Der Abfrage-Modus eignet sich bei kostenpflichtigen Einwahl-Verbindungen zu den Überwachungsempfängern UE, die über ein Modem oder allenfalls über GSM angeschlossen sind.

### Hybrid Modus

Der Hybrid-Modus stellt einen Mischbetrieb zwischen dem vorstehend beschriebenen Online- und Abfrage-Modus dar. Die Idee ist, dass die Überwachungsempfänger UE grundsätzlich im Abfrage-Modus in definierbaren Zeitintervallen abgerufen werden, z.B. aus Kostengründen. Es können jedoch zusätzlich besonders wichtige Telegramme für den Online-Modus bestimmt werden. Diese werden sofort nach dem Versenden abgerufen.

### Push Modus

Die Idee bei diesem Modus ist, dass sich der Überwachungsempfänger UE selbstständig bei der Zentrale meldet, wenn ein gewisses Ereignis eingetroffen ist. Zum Beispiel könnte der Empfänger bei jedem empfangenen Telegramm oder wenn der interne Zwischenspeicher RB voll ist, Daten an die Überwachungszentrale UE übertragen. Dieser Modus erfordert eine zusätzliche Intelligenz im Überwachungsempfänger UE oder dem Wandler: Er muss in der Lage sein ein Modem anzusprechen um eine Verbindung zur Zentrale herzustellen. Zudem muss der Überwachungsempfänger UE auf den Fall reagieren können wo die Überwachungszentrale UZ unerreichbar ist (zum Beispiel weil ein anderer Überwachungsempfänger UE eine Verbindung aufgebaut hat). Für diese Zusatzfunktionen muss eine intelligente Komponente ( zum Beispiel ein Embedded System) eingesetzt werden.

Zusätzlich zum vorbeschriebenen Ausführungsbeispiel der vorliegenden Erfindung kann es sinnvoll sein, die gemäss dem Stand der Technik praktizierte Überwachung auf dem Mittelspannungsnetz MS parallel dazu weiterzuführen.

Es ist ebenso möglich, die Funktion der Überwachungszentrale UZ und die Funktion des Rundsteuerkommandogerät RKG in einer einzigen Einheit zu integrieren; dies stellt eine weitere vorteilhafte Ausführungsform der vorliegenden Erfindung dar.

### Liste der verwendeten Bezugszeichen und Abkürzungen

- Com: Kommunikationsstrecke
- GSM: Global System for Mobile Communication
- HS: Hochspannungsnetz
- HSCSD: High Speed Circuit Switched Data; GSM
- ISDN: Integrated Services Digital Network
- MS: Mittelspannungsnetz
- KE: Kontrollempfänger
- LAN: Local Area Network, Ethernet; lokales Netz
- NS: Niederspannungsnetz; Versorgungsgebiet
- PSTN: Public Switched Telephone Network
- RKG: Rundsteuerkommandogerät
- RKG-US: Unterstellen-Kommandogerät
- WT: Wechselstromtelegraphiegerät
- RB: Ringpuffer, ring buffer
- RD: Rundsteuertelegramm-Detektor
- RE: Rundsteuerempfänger
- RS: Rundsteuersender
- UE: Überwachungsempfänger
- UZ: Überwachungszentrale
- WT: Wechselstromtelegraphiegerät

### Liste der zitierten Literatur

[1] EP 0 729 213 B1
   Anordnung mit einem Rundsteuersender und einer dem Rundsteuersender nachgeschalteten Netzankopplung Siemens Schweiz AG, CH - 8047 Zürich
[2] EP 0 738 033 B1 Rundsteueranlage
   Siemens Schweiz AG, CH - 8047 Zürich
[3] Rundsteuertechnik
   Paessler, Ernst-Robert
   Publicis MCD Verlag, Erlangen
   VWEB erlags- und Wirtschaftsgesellschaft der Elektrizitätswerke m.b.H.; Frankfurt/Main ISBN 3-89578-004-9
   ISBN 3-8022-0414-X

## Patentansprüche

1. Rundsteuersystem für ein Versorgungsgebiet (NS), wobei das Rundsteuersystem aufweist:
ein Rundsteuerkommandogerät (RKG), das mit einem Rundsteuersender (RS)
gekoppelt ist, wobei der Rundsteuersender (RS) dazu angepasst ist, vom Rundsteuerkommandogerät (RKG) ausgesandte Telegramme als tonfrequente Signale in das Versorgungsgebiet (NS) einzuspeisen;
**dadurch gekennzeichnet, dass** das Rundsteuersystem zusätzlich dazu angepasst ist, die Funktion einer Überwachungszentrale (UZ) und die Funktion des Rundsteuerkommandogeräts (RKG) in einer einzigen Einheit zu integrieren;
wobei im Versorgungsgebiet (NS) Überwachungsempfänger (UE) verteilt angeordnet sind, die dazu angepasst sind, ausgesandte tonfrequente Telegramme zu empfangen und in einem Pufferspeicher (RB) Zwischenspeichern;
und wobei die Überwachungszentrale (UZ) mit den Überwachungsempfängern (UE) verbunden und dazu angepasst ist, die in den Überwachungsempfängern (UE) zwischengespeicherten Telegramme zu empfangen und mit den vom Rundsteuerkommandogerät (RKG) ausgesandten Telegrammen zu vergleichen.

2. Rundsteuersystem nach Anspruch 1, **dadurch gekennzeichnet, dass** das Rundsteuerkommandogerät (RKG) mit der Überwachungszentrale über ein Lokales Netz (LAN) verbunden ist.

3. Rundsteuersystem nach Anspruch 1 oder 2, **dadurch gekennzeichnet, dass** der Pufferspeicher als Ringpufferspeicher (RB) ausgebildet ist und dass der Überwachungsempfänger ein Prozessorsystem enthält, das den Ringpufferspeicher administriert.

4. Verfahren zur Überwachung des korrekten Empfangs von in einem Versorgungsgebiet (NS) von einem Rundsteuersystem ausgesandten Telegrammen, wobei das Rundsteuersystem aufweist:
ein Rundsteuerkommandogerät (RKG), das mit einem Rundsteuersender (RS) gekoppelt ist, wobei der Rundsteuersender (RS) vom Rundsteuerkommandogerät (RKG) ausgesandte Telegramme als tonfrequente Signale in das Versorgungsgebiet (NS) einspeist;
**dadurch gekennzeichnet, dass**
die Funktion einer Überwachungszentrale (UZ) und die Funktion des Rundsteuerkommandogeräts (RKG) in einer einzigen Einheit integriert sind;
im Versorgungsgebiet (NS) Überwachungsempfänger (UE) verteilt angeordnet sind, die ausgesandte tonfrequente Telegramme empfangen und zwischenspeichern;
und wobei eine Überwachungszentrale (UZ) mit den Überwachungsempfängern (UE) verbunden ist und dieser Überwachungszentrale (UZ) die in den Überwachungsempfängern (UZ) in einem Pufferspeicher (RB) zwischengespeicherten Telegramme übermittelt werden und mit den vom Rundsteuerkommandogerät (RKG) ausgesandten Telegrammen verglichen werden.

5. Verfahren nach Anspruch 4, **dadurch gekennzeichnet, dass** die Übermittlung der zwischengespeicherten Telegramme von der Überwachungszentrale (UZ) initiiert wird.

6. Verfahren nach Anspruch 4, **dadurch gekennzeichnet, dass** die Übermittlung der zwischengespeicherten Telegramme unmittelbar nach deren Empfang erfolgt.

7. Verfahren nach Anspruch 4, **dadurch gekennzeichnet, dass** die Übermittlung der zwischengespeicherten Telegramme durch die Überwachungsempfänger (UE) initiiert wird.

8. Verfahren nach Anspruch 7, **dadurch gekennzeichnet, dass** die Übermittlung der zwischengespeicherten Telegramme abhängig vom Füllstand des im Überwachungsempfänger (UE) befindlichen Pufferspeichers (RB) initiiert wird.

9. Verfahren nach einem der Ansprüche 4 bis 8, **dadurch gekennzeichnet, dass** im Pufferspeicher (RB) des Überwachungsempfängers (UE) folgende Daten gespeichert werden:
Telegramminhalt,
Pegel des empfangenen Telegramms,
Uhrzeit des Empfangs des Telegramms.

## Claims

1. A ripple control system for a supply area (NS), wherein the ripple control system comprises:
- a ripple control unit (RKG), which is coupled with a ripple control transmitter (RS), wherein the ripple control transmitter (RS) is adapted to supply the telegrams sent by the ripple control unit (RKG) in the supply area (NS) as audio frequency signals; **characterized in that** the ripple control system is also adapted to integrate the function of a monitoring center (UZ) and the function of the ripple control unit (RKG) into a single unit; wherein monitoring receivers (UE), which are adapted to receive the audio frequency telegrams and temporarily store them in a buffer memory (RB), are distributed in the supply area (NS); and that the monitoring center (UZ) is connected to the monitoring receivers (UE), and is adapted to receive the telegrams which are temporarily stored in the monitoring receivers (UE) and compare them with the telegrams sent by the ripple control unit (RKG).

2. The ripple control system according to claim 1, **characterized in that** the ripple control unit (RKG) is connected to the monitoring center via a local network (LAN).

3. The ripple control system according to claim 1 or 2, **characterized in that** the buffer memory is designed as a circular buffer (RB) and that the monitoring receiver incorporates a processor system which administers the circular buffer.

4. A method for monitoring the correct receipt in a supply area (NS) of telegrams sent by a ripple control system, wherein the ripple control system comprises:
- a ripple control unit (RKG) which is coupled with a ripple control transmitter (RS), wherein the ripple control transmitter (RS) supplies telegrams sent by the ripple control unit (RKG) in the supply area (NS) as audio frequency signals;
**characterized in that**
- the function of a monitoring center (UZ) and the function of a ripple control unit (RKG) are integrated into a single unit;
- monitoring receivers (UE) which receive the audio frequency telegrams sent and temporarily store them are distributed in the supply area;
- a monitoring center (UZ) is connected to the monitoring receivers (UE), wherein the telegrams temporarily stored in the monitoring receivers (UE) in a buffer memory (RB) and are transmitted to the monitoring center (UZ) and compared with the telegrams sent by the ripple control unit (RKG).

5. The method according to claim 4, **characterized in that** the transmission of the temporarily stored telegrams is initiated by the monitoring center (UZ).

6. The method according to claim 4, **characterized in that** the transmission of the temporarily stored telegrams occurs immediately after they are received.

7. The method according to claim 4, **characterized in that** the transmission of the temporarily stored telegrams is initiated by the monitoring receivers (UE).

8. The procedure according to claim 7, **characterized in that** the transmission of the temporarily stored telegrams is initiated dependant on the filling level of the buffer memory (RB) located in the monitoring receivers (UE).

9. The method according to any of claims 4 to 8, **characterized in that** the following data is saved in the monitoring receivers' (UE) buffer memory (RB):
- telegram content,
- level of received telegrams,
- time of receipt of the telegrams.

## Revendications

1. Système de commande centralisé d'une zone de couverture (NS), le système de commande centralisé comprenant :
- un manipulateur de commande centralisé (RKG) qui est couplé à un émetteur de commande centralisé (RS), l'émetteur de commande centralisé (RS) étant adapté pour délivrer des messages, émis par le manipulateur de commande centralisé (RKG), dans la zone de couverture (NS) sous forme de signaux audiofréquence ;
**caractérisé en ce que**
- le système de commande centralisé est adapté pour intégrer la fonction d'un centre de surveillance (UZ) et la fonction du manipulateur de commande centralisé (RKG) dans une seule unité ;
- des récepteurs de surveillance, qui sont adaptés pour recevoir des messages audiofréquence émis et pour les mémoriser provisoirement dans une mémoire tampon (RB), sont disposés de façon répartie dans la zone de couverture (NS) ;
- le centre de surveillance (UZ) est relié aux récepteurs de surveillance (UE) et est adapté pour recevoir les messages mémorisés provisoirement dans les récepteurs de surveillance (UE) et pour les comparer avec les messages émis par le manipulateur de commande centralisé (RKG).

2. Système de commande centralisé selon la revendication 1, **caractérisé en ce que** le manipulateur de commande centralisé (RKG) est relié au centre de surveillance par un réseau local (LAN).

3. Système de commande centralisé selon la revendication 1 ou 2, **caractérisé en ce que** la mémoire tampon est configurée comme une mémoire tampon en anneau (RB) et **en ce que** le récepteur de surveillance comprend un système à processeur qui gère la mémoire tampon en anneau.

4. Procédé de surveillance de la réception correcte de messages émis dans une zone d'alimentation (NS) par un système de commande centralisé, le système de commande centralisé comprenant :
- un manipulateur de commande centralisé (RKG) qui est couplé à un émetteur de commande centralisé (RS), l'émetteur de commande centralisé (RS) délivrant des messages, émis par le manipulateur de commande centralisé (RKG), dans la zone de couverture (NS) sous forme de signaux audiofréquence ;
**caractérisé en ce que**
- la fonction d'un centre de surveillance (UZ) et la fonction du dispositif de commande centralisé (RKG) sont intégrés dans une seule unité ;
- des récepteurs de surveillance, qui reçoivent des messages audiofréquence émis et les mémorisent provisoirement, sont disposés de façon répartie dans la zone de couverture (NS) ;
- le centre de surveillance (UZ) est relié aux récepteurs de surveillance (UE) et les messages, mémorisés provisoirement dans une mémoire tampon dans les récepteurs de surveillance (UE), sont transmis à ce centre de surveillance (UZ) et comparés avec les messages émis par le manipulateur de commande centralisé (RKG).

5. Procédé selon la revendication 4, **caractérisé en ce que** la transmission des messages mis en mémoire tampon est déclenchée par le centre de surveillance (UZ).

6. Procédé selon la revendication 4, **caractérisé en ce que** la transmission des messages mis en mémoire tampon est effectuée immédiatement après leur réception.

7. Procédé selon la revendication 4, **caractérisé en ce que** la transmission des les messages mis en mémoire tampon est déclenchée par le récepteur de surveillance (UE).

8. Procédé selon la revendication 7, **caractérisé en ce que** la transmission des messages mis en mémoire tampon est déclenchée en fonction de l'état de remplissage de la mémoire tampon (RB) située dans le récepteur de surveillance (UE).

9. Procédé selon l'une des revendications 4 à 8, **caractérisé en ce que** les données suivantes sont mémorisées dans la mémoire tampon (RB) du récepteur de surveillance (UE) :
- contenu des messages,
- Niveau du message reçu,
- l'heure de réception du message.
